# EUROPÄISCHE PATENTSCHRIFT

(11) **EP 2 869 988 B1**
(45) Veröffentlichungstag und Bekanntmachung des Hinweises auf die Patenterteilung: **14.06.2017**
(21) Anmeldenummer: 13733250.8
(22) Anmeldetag: 25.06.2013
(51) Int. Cl.: B32B 15/04, B32B 15/095, B32B 27/32

(54) **VERKLEBTES VERPACKUNGSSYSTEM FÜR LEBENSMITTEL**
ADHESIVELY BONDED PACKAGING SYSTEM FOR FOOD
SYSTÈME D'EMBALLAGE COLLÉ POUR PRODUITS ALIMENTAIRES

(30) Priorität: 04.07.2012 US 201261667969 P; 04.07.2012 EP 12174948
(43) Veröffentlichungstag der Anmeldung: 13.05.2015
(73) Patentinhaber: BASF SE, 67056 Ludwigshafen am Rhein (DE)
(72) Erfinder: VAN SLUIJS, Christof, NL-8917 AN Leeuwarden (NL); GARCIA CASTRO, Ivette, 67067 Ludwigshafen (DE); DU FRESNE VON HOHENESCHE, Cedric, 67227 Frankenthal (DE); RANFT, Meik, 64625 Bensheim (DE)
(74) Vertreter: BASF IP Association
(86) Internationale Anmeldenummer: PCT/EP2013/063205
(87) Internationale Veröffentlichungsnummer: WO 2014/005879

(56) Entgegenhaltungen:
- WO-A1-2007/044999

## Beschreibung

Die vorliegende Erfindung betrifft ein neues verklebtes Verpackungssystem für Lebensmittel, insbesondere Milchprodukte.

Zur Verpackung von Lebensmitteln werden häufig verschiedene Materialien miteinander verklebt um deren jeweilige Eigenschaften, beispielsweise eine Barrierewirkung gegen Sauerstoff, Fett oder Wasserdampf, positiv miteinander zu kombinieren. Dies gilt genauso für die Verbindung von verschiedenen Bestandteilen einer Verpackung, beispielsweise Deckel, Boden und Wand, die miteinander verklebt werden müssen und dabei sowohl eine Dichtigkeit und die erforderliche Barrierewirkung beibehalten müssen als auch miteinander verklebbar sein müssen, ohne daß der Verpackungsinhalt von der Verklebung beeinträchtigt wird.

Aus WO 2007/044999 A1 ist es bekannt, zur Verklebung polymerer Substrate ein Gemisch einer Dispersion eines Copolymers aus Ethylen und Acrylsäure oder Methacrylsäure mit einer aliphatischen Polyurethandispersion zur Heißversiegelung polymerer Substrate einzusetzen.

Die aliphatische Polyurethandispersion fungiert dabei als Adhäsionsverbesserer der Beschichtung auf dem Substrat, wobei als Substrate polymere aber auch metallische Materialien eingesetzt werden können.

Das dort beschrieben Copolymer aus Ethylen und Acrylsäure oder Methacrylsäure weist ein zahlenmittleres Molekulargewicht von 2000 bis 50000 auf, wobei die Dispersion in Wasser durch Neutralisierung mit Alkali oder Ammoniak erhalten wird.

Nachteilig an dem aus der WO 2007/044999 A1 sind die hohen für die Heißversiegelung erforderlichen Temperaturen von 75 bis 140 °C. Ferner besteht ein Bedarf an Beschichtungen für eine Heißversiegelung mit einer verbesserten Versiegelungsstärke.

Die Aufgabe der vorliegenden Erfindung bestand darin, Verpackungssysteme zur Verfügung zu stellen, deren Heißsiegelbeschichtungen niedrigschmelzen und eine hohe Versiegelungsstärke zeigen.

Die Aufgabe wurde gelöst durch verklebte Verpackungssysteme, aufgebaut zumindest aus den Schichten
(i) Substrat 1, ausgewählt aus der Gruppe bestehend aus Aluminiumfolie, beschichteter Aluminiumfolie und Polyethylen,
(ii) mindestens einer Klebeschicht, enthaltend
   (A) 5 bis 95 Gew% mindestens einer wäßrigen Polyurethandispersion und
   (B) 5 bis 95 Gew% mindestens eines säuregruppenhaltigen Ethylencopolymers
(v) Substrat 2, ausgewählt aus der Gruppe bestehend aus Aluminiumfolie, beschichteter Aluminiumfolie und Polyethylen,
wobei das säuregruppenhaltige Ethylencopolymer zumindest aus den Monomeren Ethylen und (Meth)acrylsäure aufgebaut ist und ein gewichtsmittleres Molgewicht M_{w} von mindestens 45.000 g/mol (gemessen per GPC als vollständig methylverestertes Derivat) aufweist und wobei die Klebeschicht (ii) so zusammengesetzt ist, daß sie einen Schmelzpunkt von mindestens 40 °C und weniger als 90°C aufweist.

Das erfindungsgemäße Verpackungssystem eignet sich besonders zur Verpackung von Lebensmitteln, wie Käse, Wurst oder Margarine, besonders bevorzugt Milchprodukten, insbesondere Käse oder Schmelzkäse.

Die Klebeschicht im erfindungsgemäßen Verpackungssystem zeigt unter anderem eine gute Haftung auf den Substraten, insbesondere auf Aluminium, eine hohe Siegelstärke bei niedriger Schmelztemperatur und niedrigem Druck sowie einen Korrosionsschutzeffekt auf Aluminium.

Die erfindungsgemäßen Verpackungssysteme sind zumindest aus den oben genannten Schichten (i), (ii) und (v) zusammengesetzt und können optional noch weitere Schichten zwischen diesen enthalten, insbesondere eine Schutzschicht (iii) und/oder eine weitere Substratschicht (iv).

Bei der Schicht (i) handelt es sich um das Substrat 1, ausgewählt aus der Gruppe bestehend aus Aluminiumfolie, beschichteter Aluminiumfolie und Polyethylen, bevorzugt ausgewählt aus der Gruppe bestehend aus Aluminiumfolie und beschichteter Aluminiumfolie, besonders bevorzugt handelt es sich um Aluminiumfolie.

Die Dicke dieser Substratschicht ist erfindungsgemäß nicht wesentlich und beträgt in der Regel von 4 bis 20 µm, bevorzugt 6 bis 15 µm und besonders bevorzugt 8 bis 15 µm.

Im Fall von Aluminium als Substrat kann die Oberfläche mit üblichen Beiz- oder Ätzlösungen, bevorzugt jedoch mit Glanzlösungen behandelt sein, die beispielsweise HBF₄, Na₂CO₃, Na₃PO₄, H₂SO₄ und/oder H₃PO₄ sowie Natrium- oder Kalium Carbonate, Hydrogencarbonate, Phosphate, Hydrogenphosphate oder Dihydrogenphosphate enthalten können.

Beschichtetes Aluminium kann mit Kunststoff- und/oder Anstrichschichten versehen sein.

Im Fall von Polyethylenfolien kann die Schichtdicke der Folien in der Regel von 5 bis 25 µm, bevorzugt 10 bis 20 µm und besonders bevorzugt 10 bis 15 µm betragen.

Auf das Substrat 1 wird mindestens eine Klebeschicht (ii) aufgebracht, wobei optional das Substrat 1 noch mit einer Grundierung (Primer) versehen sein kann. Durch die hohe Haftung der erfindungsgemäßen Klebeschicht (ii) ist diese Grundierungsschicht jedoch bevorzugt verzichtbar, so daß Klebeschicht (ii) direkt auf das Substrat 1 aufgebracht werden kann.

Die Klebeschicht (ii) enthält 5 bis 95 Gew%, bevorzugt 10 bis 70 Gew% und besonders bevorzugt 15 bis 40 Gew% mindestens einer wäßrigen Polyurethandispersion (A) und 5 bis 95 Gew%, bevorzugt 30 bis 90 Gew% und besonders bevorzugt 60 bis 85 Gew% mindestens eines säuregruppenhaltigen Ethylencopolymers (B), wobei die Klebeschicht (ii) so zusammengesetzt ist, daß sie einen Schmelzpunkt (gemessen gemäß ASTM D3418 - 82, Abschnitt 10.1 als Tₘ (melting peak temperature) bei einer Aufheizrate von 20 °C/min) bevorzugt von mindestens 40 °C und bevorzugt mindestens 45 °C und weniger als 90°C, bevorzugt weniger als 80 °C, besonders bevorzugt weniger als 75 °C und ganz besonders bevorzugt weniger als 70 °C aufweist.

Bei einer Heißversiegelung in diesem Temperaturbereich wird einerseits das in der Verpackung befindliche Lebensmittelprodukt thermisch wenigstmöglich belastet, andererseits ist sichergestellt, daß sich die Verklebung der Substrate bei kurzzeitig erhöhter Temperatur nicht löst.

Bevorzugte wäßrige Polyurethandispersionen (A), kann man herstellen durch
(I) Herstellung eines Polyurethans durch Umsetzung von
   a) mehrwertigen Isocyanaten mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
   c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
   d) von den Monomeren (a), (b) und (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppe oder eine potentiell hydrophile Gruppe tragen, wodurch die Wasserdispergierbarkeit der Polyurethane bewirkt wird,
   zu einem Polyurethan
(II) anschließende Dispergierung des Polyurethans in Wasser.

Als Monomere in (a) kommen die üblicherweise in der Polyurethanchemie eingesetzten Polyisocyanate in Betracht, beispielsweise aliphatische, aromatische und cycloaliphatische Di- und Polyisocyanate, wobei die aliphatischen Kohlenwasserstoffreste beispielsweise 4 bis 12 Kohlenstoffatome, und die cycloaliphatischen oder aromatischen Kohlenwasserstoffreste beispielsweise 6 bis 15 Kohlenstoffatome oder die araliphatischen Kohlenwasserstoffreste beispielsweise 7 bis 15 Kohlenstoffatome aufweisen, mit einer NCO Funktionalität von mindestens 1,8, bevorzugt 1,8 bis 5 und besonders bevorzugt 2 bis 4, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, trans/trans-, das cis/cis- und das cis/trans-Isomere des 4,4'- oder 2,4'-Di(isocyanatocyclohexyl)-methan, 1-Isocyanato-3,3,5- trimethyl-5-(isocyanatomethyl)cyclohexan(Isophorondiisocyanat), 2,2-Bis-(4-isocyanatocyclohexyl)-propan, 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, 1,4-Diisocyanatobenzol oder Diphenylether-4,4'-diisocyanat.

Es können auch Gemische der genannten Diisocyanate vorliegen.

Bevorzugte aliphatische und cycloaliphatische Diisocyanate sind Isophorondiisocyanat, Hexamethylendiisocyanat, meta-Tetramethylxylylendiisocyanat (m-TMXDI) und 1,1-Methylenbis-[4-isocyanato]-cyclohexan (H₁₂MDI).

Bevorzugte aromatische Diisocyanate sind 2,4- oder 2,6-Toluylendiisocyanat und deren Isomerengemische und 2,2'-, 2,4'- und 4,4'-Methylendi(phenylisocyanat) und deren Isomerengemische.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt als Komponente a) sind aromatische oder aliphatische Di- und Polyisocyanate, z.B. die vorstehend genannten aromatischen oder aliphatischen Diisocyanate, oder deren Mischungen.

### Weiterhin bevorzugt sind

1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 20 mol-% 2,4 Diisocyanatotoluol und 80 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a) kann man auch Isocyanate einsetzen, die neben den freien Isocyanatgruppen weitere verkappte Isocyanatgruppen, z.B. Uretdion- oder Urethangruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI).

Als Diole (b) kommen vornehmlich höhermolekulare Diole (b1) in Betracht, die ein Molekulargewicht von etwa 500 bis 5000, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin- 1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die von Hydroxycarbonsäuren der allgemeinen Formel HO-(CH₂)_{z}-COOH, wobei z eine Zahl von 1 bis 20, bevorzugt eine ungerade Zahl von 3 bis 19 ist, abgeleitet sind, z.B. ε-caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxydiphenyl)-propan oder Anilin erhältlich. Bevorzugt als Polyetherdiole sind Polyethylenglykol, Polypropylenglykol oder Polytetrahydrofuran mit einem Molekulargewicht von 500 bis 5000, besonders bevorzugt 1000 bis 4500, besonders bevorzugt 2000 bis 4000 g/mol, und ganz besonders bevorzugt 3500 bis 4500 g/mol.

Die Polyesterdiole und Polyetherdiole können auch als Gemische im Verhältnis 0,1 : 1 bis 1 : 9 eingesetzt werden.

Bevorzugte Monomere (b1) sind Polyesterdiole.

Als Diole (b) neben den Diolen (b1) können noch niedermolekulare Diole (b2) mit einem Molekulargewicht von etwa 50 bis 500, vorzugsweise von 60 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,2 : 1 bis 5 : 1, besonders bevorzugt 0,5 : 1 bis 2 : 1.

Die Monomere (c), die von den Diolen (b) verschieden sind, dienen im allgemeinen der Vernetzung oder der Kettenverlängerung. Es sind im allgemeinen mehr als zweiwertige nichtaromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolbutan, Trimethylolpropan, Trimethylolethan, Pentaerythrit, Glycerin, Zuckeralkohole, wie z.B. Sorbit, Mannit, Diglycerol, Threit, Erythrit, Adonit (Ribit), Arabit (Lyxit), Xylit, Dulcit (Galactit), Maltit oder Isomalt, oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wäßrige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Die Polyurethane enthalten bevorzugt kein Polyamin oder 1 bis 10, besonders bevorzugt 4 bis 8 mol-%, bezogen auf die Gesamtmenge der Komponenten (b) und (c) eines Polyamins mit mindestens 2 gegenüber Isocyanaten reaktiven Aminogruppen als Monomere (c).

Ferner können zum Kettenabbruch in untergeordneten Mengen, d.h. bevorzugt in Mengen von weniger als 10 mol-%, bezogen auf die Komponenten (b) und (c), Monoalkohole eingesetzt werden. Ihre Funktion ist im allgemeinen ähnlich wie die der Monoisocyanate, d.h. sie dienen hauptsächlich zur Funktionalisierung des Polyurethans. Beispiele sind Methanol, Ethanol, isoPropanol, n-Propanol, n-Butanol, iso-Butanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol.

Um die Wasserdispergierbarkeit der Polyurethane zu erreichen, sind die Polyurethane neben den Komponenten (a), (b) und (c) aus von den Komponenten (a), (b) und (c) verschiedenen Monomere (d), die wenigstens eine Isocyanatgruppe oder wenigstens eine gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Bei den (potentiell) hydrophilen Gruppen kann es sich um nichtionische oder bevorzugt um ionische hydrophile Gruppen oder um potentiell ionische hydrophile Gruppen und besonders bevorzugt um kationische hydrophile Gruppen oder um potentiell kationische hydrophile Gruppen handeln, ganz besonders bevorzugt um kationische hydrophile Gruppen.

Der Anteil der Komponenten mit (potentiell) hydrophilen Gruppen an der Gesamtmenge der Komponenten (a), (b), (c) und (d) wird im allgemeinen so bemessen, daß die Molmenge der (potentiell) hydrophilen Gruppen, bezogen auf die Gewichtsmenge aller Monomere (a) bis (b), 30 bis 1000, bevorzugt 50 bis 500 und besonders bevorzugt 80 bis 300 mmol/kg beträgt.

Als nichtionische hydrophile Gruppen kommen beispielsweise gemischte oder reine Polyethylen-, Polypropylenglykole, insbesondere Polyethylenglykolether aus vorzugsweise 5 bis 100, bevorzugt 10 bis 80 Ethylenoxid- und/oder Propylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (d).

Bevorzugte Monomere mit nichtionischen hydrophilen Gruppen sind das Polyethylenglykol und Diisocyanate, die einen endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Als Monomere mit potentiell anionischen Gruppen werden üblicherweise aliphatische, cycloaliphatische, araliphatische oder aromatische Mono- und Dihydroxycarbonsäuren in Betracht, die mindestens eine alkoholische Hydroxylgruppe oder eine primäre oder sekundäre Aminogruppe tragen.

Solche Verbindungen werden beispielsweise durch die allgemeine Formel

RG-R⁴-DG

dargestellt, worin
RG mindestens eine gegen Isocyanat reaktive Gruppe bedeutet,
DG mindestens eine dispergieraktive Gruppe und
R⁴ einen 1 bis 20 Kohlenstoffatome enthaltenden aliphatischen, cycloaliphatischen oder aromatischen Rest.

Beispiele für RG sind -OH, -SH, -NH₂ oder -NHR⁵, worin R⁵ Methyl, Ethyl, *iso*-Propyl, n-Propyl, n-Butyl, *iso*-Butyl, *sek*-Butyl, *tert*-Butyl, Cyclopentyl oder Cyclohexyl sein kann.

Bevorzugt handelt es sich bei solchen Komponente z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure sowie deren Alkali- Erdalkali- oder Ammoniumsalze und besonders bevorzugt um die genannten Monohydroxycarbon- und -sulfonsäuren sowie Monoaminocarbon- und -sulfonsäuren.

Ganz besonders bevorzugt sind Dihydroxyalkylcarbonsäuren, vor allem mit 3 bis 10 Kohlenstoffatomen, wie sie auch in der US-A 3 412 054 beschrieben sind. Insbesondere bevorzugt sind Verbindungen der allgemeinen Formel

HO-R¹-CR³(COOH)-R²-OH

in welcher R¹ und R² für eine C₁- bis C₄-Alkandiyl-Einheit und R³ für eine C₁- bis C₄-Alkyl-Einheit steht. Vor allem sind Dimethylolbuttersäure und besonders Dimethylolpropionsäure (DMPA) bevorzugt.

Weiterhin eignen sich entsprechende Dihydroxysulfonsäuren und Dihydroxyphosponsäuren wie 2,3-Dihydroxypropanphosphonsäure sowie die entsprechenden Säuren, in denen mindestens eine Hydroxygruppe durch eine Aminogruppe ersetzt ist, beispielsweise solche der Formel

H₂N-R¹-CR³(COOH)-R²-NH₂

in welcher R¹, R² und R³ die gleichen Bedeutungen haben können, wie oben angeführt.

Ansonsten geeignet sind Dihydroxyverbindungen mit einem Molekulargewicht über 500 bis 10000 g/mol mit mindestens 2 Carboxylatgruppen, die aus der DE-A 4 140 486 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxyverbindungen sind insbesondere die als Kettenverlängerer aufgeführten Monomere (b2) sowie die Diole (b1) geeignet.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Säuregruppen, Anhydridgruppen oder tertiäre Aminogruppen.
Ionische Monomere (d) oder potenziell ionische Monomere (d) sind z.B. in Ullmanns Encyklopädie der technischen Chemie, 4. Auflage, Band 19, S.311-313 und beispielsweise in der DE-A 1 495 745 ausführlich beschrieben.

Als potentiell kationische Monomere (d) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren, starken organischen Säuren, wie beispielsweise Ameisen-, Essig- oder Milchsäure, oder durch Umsetzung mit geeigneten Quaternisierungsmitteln wie C₁- bis C₆-Alkylhalogeniden, z.B. Bromiden oder Chloriden, oder Di-C₁- bis C₆-Alkylsulfaten oder Di-C₁- bis C₆-Alkylcarbonaten in die Ammoniumsalze überführt. Als Monomere (d) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-amino-ethancarbonsäure sowie die entsprechenden N-Aminoalkyl-carbonsäuren, wobei die Alkandiyl-Einheiten aus 2 bis 6 Kohlenstoffatome bestehen, in Betracht.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a), (b), (c) und (d) sowie ihre jeweiligen Molmengen so gewählt, daß das Verhältnis der Molmenge an Isocyanatgruppen zu der Summe aus der Molmenge der Hydroxylgruppen und der Molmenge der funktionellen Gruppen, die mit Isocyanaten in einer Additionsreaktion reagieren können 0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis von Isocyanatgruppen zu gegenüber Isocyanat reaktiven Gruppen möglichst nahe an 1 : 1.

Neben den Komponenten (a), (b), (c) und (d) werden Monomere mit nur einer reaktiven Gruppe im allgemeinen in Mengen bis zu 15 mol-%, bevorzugt bis zu 8 mol-%, bezogen auf die Gesamtmenge der Komponenten (a), (b), (c) und (d) eingesetzt.

Die Polyaddition der Komponenten (a) bis (d) erfolgt im allgemeinen bei Reaktionstemperaturen von 20 bis 180 °C, bevorzugt 50 bis 150 °C unter Normaldruck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren mitverwendet werden. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinndiacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytylzinn-dilaurat, Zirkon-Acetylacetonat und Zirkon-2,2,6,6-tetramethyl-3,5-heptandionat.

Auch Wismut-, Zink- und Cobaltkatalysatoren sowie Cäsiumsalze können als Katalysatoren eingesetzt werden. Als Wismut-, Zink- und Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Wismut-, Zink- und Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel
(CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Meistens werden die Dispersionen nach einem der folgenden Verfahren hergestellt:
Nach dem "Acetonverfahren" wird in einem mit Wasser mischbaren und bei Normaldruck unter 100 °C siedenden Lösungsmittel, bevorzugt Aceton, aus den Komponenten (a) bis (d) ein Polyurethan hergestellt. Es wird dann soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes Polyurethan, sondern zunächst ein Präpolymer hergestellt wird, das Isocyanat-Gruppen trägt. Die Komponenten (a) bis (d) werden hierbei so gewählt, daß das definitionsgemäße Verhältnis Isocyanatgruppen zu gegenüber Isocyanat reaktiven Gruppen größer 1,0 bis 3, bevorzugt 1,05 bis 1,5 beträgt. Anschließend wird durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Bei der mindestens einen wäßrigen Polyurethandispersion (A) handelt es sich bevorzugt um Polyurethandispersionen, die mindestens einen aromatischen Baustein enthalten, also mindestens eine aromatische Struktur enthält, d.h. mindestens ein aromatisches Diisocyanat oder Polyisocyanat und/oder mindestens ein aromatisches Polyol als Aufbaukomponente. Dies kann erzielt werden durch Einsatz mindestens eines aromatischen Di- oder Polyisocyanats (a), bevorzugt 2,4- oder 2,6-Toluylendiisocyanat und deren Isomerengemische und/oder 2,2'-, 2,4'- und 4,4'-Methylendi(phenylisocyanat) und deren Isomerengemische, und/oder mindestens eines Diols (b1), das mindestens eine aromatische Aufbaukomponente enthält.

Bevorzugt sind dabei Polyester als Diole (b1), in denen mindestens eine aromatische Dicarbonsäure als Aufbaukomponente eingesetzt wird, bevorzugt Phthalsäure(anhydrid), Isophthalsäure(anhydrid) oder Terephthalsäure.

In einer besonders bevorzugten Ausführungsform ist das Polyurethan der Polyurethandispersion (A) aufgebaut aus mindestens einem aromatischen Di- oder Polyisocyanat (a) und mindestens einem Polyester, der aus aliphatischen oder cycloaliphatischen Dicarbonsäuren und aliphatischen oder cycloaliphatischen Dicarbonsäuren aufgebaut ist.

Das säuregruppenhaltige Ethylencopolymer (B) ist zumindest aus den Monomeren Ethylen und (Meth)acrylsäure aufgebaut und weist ein gewichtsmittleres Molgewicht M_{w} von mindestens 45.000 g/mol, bevorzugt mindestens 50.000 g/mol, besonders bevorzugt mindestens 55.000 g/mol, ganz besonders bevorzugt mindestens 60.000, insbesondere mindestens 65.000 und speziell mindestens 70.000 g/mol (bestimmt durch Gelpermeationschromatographie mit Polystyrol als Standard und Tetrahydrofuran als Elutionsmittel) auf. Das gewichtsmittlere Molgewicht M_{w} beträgt in der Regel nicht mehr als 120.000 g/mol, bevorzugt nicht mehr als 110.000 und besonders bevorzugt nicht mehr als 100.000 g/mol.

Das gewichtsmittlere Molgewicht M_{w} des säuregruppenhaltigen Ethylencopolymers wurde per GPC am vollständig methylveresterten Derivat ermittelt.

Zur vollständigen Methylierung wurden 10 Gew.Teile des säuregruppenhaltigen Ethylencopolymers mit 80 Gew.Teilen Methanol und para-Toluolsulfonsäure vermischt und das Gemisch 24 Stunden bei normalem Druck unter Rückfluß erhitzt. Anschließend wird das überschüssige Methanol abdestilliert und das derivatisierte Ethylencopolymer in die GPC-Messung eingesetzt.

Durch dieses relativ hohe Molgewicht ist es möglich, die Versiegelungsstärke (cohesive strength) der Klebeschicht (ii) zu erhöhen, so daß sich die verklebten Substrate nicht so leicht voneinander lösen.

In einer bevorzugten Ausführungsform weisen die säuregruppenhaltige Ethylencopolymere einen Schmelzindex-Test (Melt Flow Index, MFI) nach ASTM D1238 bei 190 °C und 2,16 kg von 200 bis 300 g/10 min auf, besonders bevorzugt von 240 bis 290 g/10 min. Dabei wird eine polymere Schmelze bei festgelegter Temperatur und (Gewichts-)Kraft durch ein Extrusions-Plastometer gedrückt. Die nach der jeweiligen Zeitdauer aufgefangene Schmelze wird gewogen und in die Menge in Gramm umgerechnet, die innerhalb von 10 Minuten durchgeflossen wäre.

In einer weiteren bevorzugten Ausführungsform weisen die säuregruppenhaltigen Ethylencopolymere einen Schmelzpunkt von mehr als 35 °C, besonders bevorzugt mehr als 40 und ganz besonders bevorzugt von mindestens 45 °C aus.

Der Gehalt an (Meth)acrylsäure g), was in dieser Schrift für Methacrylsäure oder Acrylsäure steht, im Ethylencopolymer (B) beträgt bevorzugt zwischen 10 und 40 Gew% und besonders bevorzugt zwischen 15 und 30 Gew% und ist bestimmbar über Ermittlung der Säurezahl, bevorzugt potentiometrisch gemäß DIN EN ISO 3682. In einer besonders bevorzugten Ausführungsform beträgt der Gehalt an Acrylsäure von 15 bis 30 Gew%. In einer weiteren besonders bevorzugten Ausführungsform beträgt der Gehalt an Methacrylsäure von 22 bis 28 Gew%.

Dieser spezielle Gehalt an (Meth)acrylsäure führt einerseits zu einer erhöhten Haftung der Klebeschicht (ii) an metallischen Substraten und bewirkt auf diesen andererseits eine Korrosionsschutzwirkung.

Polyolefinwachse (B) enthalten als formale, copolymerisierte Aufbaukomponenten
f) mindestens ein Olefin ohne weitere funktionelle Gruppen,
g) Methacrylsäure und/oder Acrylsäure,
h) gegebenenfalls mindestens ein von f) und g) verschiedenes, mindestens eine funktionelle Gruppe tragendes Monomer
jeweils in einpolymerisierter Form.

Bei den Monomeren f) handelt es sich um mindestens ein Olefin ohne weitere funktionelle Gruppen, bevorzugt um ein Olefin mit genau einer Doppelbindung, besonders bevorzugt um ein α-Olefin, ganz besonders bevorzugt um Ethylen.

Bevorzugt handelt es sich bei den Olefinen f) um reine Kohlenwasserstoffe ohne weitere Heteroatome.

Beispiele für Olefine sind Ethylen, Propylen, 1-Buten, 2-Buten, *iso*-Buten, 1-Penten, 2-Penten, 1-Hexen, 1-Octen, Polyisobutene mit einem zahlenmittleren Molekulargewicht Mₙ von 100 bis 1000 Dalton, Cyclopenten, Cyclohexen, Butadien, Isopren und Styrol.

Beispiele für α-Olefine sind solche der Formel (I)

R⁶-CH=CH₂,

worin R⁶ Wasserstoff oder gegebenenfalls durch ein oder mehrere Sauerstoff- und/oder Schwefelatome und/oder ein oder mehrere substituierte oder unsubstituierte Iminogruppen unterbrochenes C₁ - C₁₈-Alkyl bedeutet, bevorzugt Wasserstoff oder
C₁ bis C₄-Alkyl, besonders bevorzugt Wasserstoff.

Bevorzugte α-Olefine sind Ethylen, Propylen, 1-Buten, *iso*-Buten, 1-Penten, 1-Hexen und 1-Octen, bevorzugt Ethylen, Propylen, *iso*-Buten, besonders bevorzugt Ethylen oder Propylen, ganz besonders bevorzugt Ethylen.

Bei dem Monomer g) handelt es sich um Methacrylsäure oder Acrylsäure.

Bei dem Monomer h) handelt es sich um gegebenenfalls mindestens ein von f) und g) verschiedenes, mindestens eine funktionelle Gruppe tragendes Monomer.

Funktionelle Gruppen sind darin solche Atomgruppen, die andere Atome als Kohlenstoff oder Wasserstoff enthalten. Beispiel dafür sind Hydroxy-, un-, mono- oder disubstituierte Amino-, Mercapto-, Ether-, Sulfonsäure-, Phosphorsäure-, Phosphonsäure-, Carbonsäureamid-, Carbonsäureester-, Sulfonsäureester-, Phosphorsäureester-, Phosphonsäureester- oder Nitrilgruppen. Bevorzugt sind Hydroxy-, Amino-, Ether- und Carbonsäureestergruppen, besonders bevorzugt sind Ether- und Carbonsäureestergruppen.

Genannt als Monomere h) seien z.B. C₁-C₂₀-Alkyl(meth)acrylate, C₁-C₂₀-Alkylalkylenoxid-(meth)acrylate, Vinylester von bis zu 20 C-Atomen enthaltenden Carbonsäuren, ethylenisch ungesättigte Nitrile, Vinylether von 1 bis 10 C-Atome enthaltenden Alkoholen.

Als (Meth)acrylsäurealkylester bevorzugt sind solche mit einem C₁-C₁₀-Alkylrest, bevorzugt Methylmethacrylat, Methylacrylat, n-Butylacrylat, Ethylacrylat, 2-Ethylhexylacrylat und 2-Propylheptylacrylat.

Bei den C₁-C₂₀-Alkyl-alkylenoxid(meth)acrylaten handelt es sich um Verbindungen der Formel 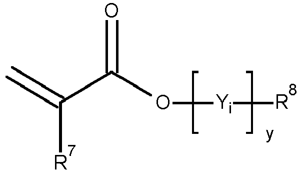 worin,
- R⁷: ausgewählt ist aus der Gruppe bestehend aus Wasserstoff und Methyl, bevorzugt Wasserstoff
- R⁸: C₁-C₂₀ Alkyl,
y eine positive ganze Zahl von 1 bis 50, bevorzugt 1 bis 40, besonders bevorzugt 2 bis 30, ganz besonders bevorzugt 3 bis 25 und insbesondere 4 bis 20 ist, und
jedes Yᵢ für i = 1 bis y unabhängig voneinander ausgewählt ist aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-, und -CHPh-CH₂-O-, bevorzugt aus der Gruppe -CH₂-CH₂-O-, -CH₂-CH(CH₃)-O-, und -CH(CH₃)-CH₂-O-, und besonders bevorzugt -CH₂-CH₂-O-, worin Ph für Phenyl und Vin für Vinyl steht.

Insbesondere sind auch Mischungen der (Meth)acrylsäurealkylester geeignet.

Vinylester von Carbonsäuren mit 1 bis 20 C-Atomen sind bevorzugt Vinyllaurat, Vinylstearat, Vinylpropionat und Vinylacetat.

Beispiele für Nitrile sind Acrylnitril und Methacrylnitril.

Geeignete Vinylether sind z.B. Vinylmethylether, Vinylisobutylether, Vinylhexylether und Vinyloctylether.

Weiterhin sind N-Vinylformamid, N-Vinylpyrrolidon sowie N-Vinylcaprolactam einsetzbar.

In den obigen Definitionen bedeuten
gegebenenfalls durch Aryl, Alkyl, Aryloxy, Alkyloxy, Heteroatome und/oder Heterocyclen substituiertes C₂-C₂₀-Alkylen beispielsweise 1,1-Ethylen, 1,2-Ethylen, 1,1-Propylen, 1,2-Propylen, 1,3-Propylen, 1,1-Butylen, 1,2-Butylen, 1,3-Butylen, 1,4-Butylen, 1,6-He-xylen, 2-Methyl-1,3-Propylen, 2-Ethyl-1,3-Propylen, 2,2-Dimethyl-1,3-Propylen, 2,2-Di-methyl-1,4-butylen,
gegebenenfalls durch Aryl, Alkyl, Aryloxy, Alkyloxy, Heteroatome und/oder Heterocyclen substituiertes C₁-C₂₀-Alkylen umfaßt zusätzlich noch Methylen,
gegebenenfalls durch Aryl, Alkyl, Aryloxy, Alkyloxy, Heteroatome und/oder Heterocyclen substituiertes C₅-C₁₂-Cycloalkylen beispielsweise Cyclopropylen, Cyclopentylen, Cyclohexylen, Cyclooctylen, Cyclododecylen,
gegebenenfalls durch Aryl, Alkyl, Aryloxy, Alkyloxy, Heteroatome und/oder Heterocyclen substituiertes, durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen beispielsweise 3-Oxa-1,5-pentylen, 3,6-Dioxa-1,8-octylen, 3,6,9-Trioxa-1,11-undecylen, 4-Oxa-1,7-heptylen, 4,8-Dioxa-1,11-undecylen, 4,8,12-Trioxa-1,15-pentadecylen, 5-Oxa-1,9-nonylen, 5,10-Dioxa-1,14-tetradecylen, 3-Oxa-2,5-dimethyl-1,5-pentylen, 3,6-Dioxa-2,5,8-trime-thyl-1,8-octylen, 3-Oxa-1,4-dimethyl-1,5-pentylen und 3,6-Dioxa-1,4,7-trimethyl-1,8-oc-tylen,
gegebenenfalls durch Aryl, Alkyl, Aryloxy, Alkyloxy, Heteroatome und/oder Heterocyclen substituiertes C₆-C₁₂-Arylen beispielsweise 1,2-, 1,3- oder 1,4-Phenylen, 4,4'-Biphenylen, Toluylen oder Xylylen und
C₁-C₂₀-Alkyl oder gegebenenfalls durch ein oder mehrere Sauerstoff- und/oder Schwefelatome und/oder ein oder mehrere substituierte oder unsubstituierte Iminogruppen unterbrochenes C₂ - C₂₀-Alkyl beispielsweise beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hexadecyl, Octadecyl, 1,1-Dime-thylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Bu-tylphenyl)-ethyl, p-Chlorbenzyl, 2,4-Dichlorbenzyl, p-Methoxybenzyl, m-Ethoxybenzyl, 2-Cyano-ethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxo-lan-2-yl, 4-Methyl-1,3-di-oxolan-2-yl, 2-Isopropoxyethyl, 2-Butoxypropyl, 2-Octyloxy-ethyl, Chlormethyl, 2-Chlorethyl, Trichlormethyl, Trifluormethyl, 1,1-Dimethyl-2-chlor-ethyl, 2-Methoxyisopropyl, 2-Ethoxyethyl, Butylthiomethyl, 2-Dodecylthioethyl, 2-Phe-nylthioethyl, 2,2,2-Trifluorethyl, 2-Phenoxyethyl, 2-Phenoxypropyl, 3-Phenoxypropyl, 4-Phenoxybutyl, 6-Phenoxyhexyl, 2-Methoxyethyl, 2-Meth-oxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl, und bevorzugt Methyl, Ethyl, Propyl, Isopropyl,
n-Butyl, sec-Butyl, tert.-Butyl, Pentyl, Hexyl, Heptyl, Octyl, 2-Etylhexyl, 2,4,4-Trimethyl-pentyl, Decyl, Dodecyl, Tetradecyl, Hexadecyl, Octadecyl, Eicosyl, 1,1-Dimethylpropyl, 1,1-Di-methylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, 2-Cyanoethyl, 2-Cyanopropyl, Chlormethyl, 2-Chlorethyl, Trichlormethyl, Trifluormethyl, 1,1-Dimethyl-2-chlorethyl und 2,2,2-Trifluorethyl.

Beispiele für R⁶ sind Wasserstoff, Methyl, Ethyl, n-Propyl, *iso*-Propyl, n-Butyl,
sek-Butyl, tert.-Butyl, n-Pentyl, n-Hexyl, n-Octyl, n-Decyl und n-Dodecyl.
Bevorzugt sind Wasserstoff, Methyl, Ethyl, n-Propyl, n-Butyl, n-Pentyl und n-Hexyl, besonders bevorzugt sind Methyl, Ethyl, n-Butyl und n-Hexyl, ganz besonders bevorzugt ist Methyl.

Die säuregruppenhaltigen Polyolefinwachse (B) sind in der Regel wie folgt zusammengesetzt (in Gew%):
f) 40 bis 90, bevorzugt 50 bis 85, besonders bevorzugt 70 bis 85 Gew%,
g) zwischen 10 und 40 Gew% und besonders bevorzugt zwischen 15 und 30 Gew%
h) 0 bis 25, bevorzugt 0 bis 15, besonders bevorzugt 0 bis 10, ganz besonders bevorzugt 0 bis 5 und insbesondere 0 Gew%,
mit der Maßgabe, daß die Summe immer 100 Gew% ergibt.

Die Herstellung des Polyolefinwachses erfolgt in der Regel wie folgt:
Die Herstellung der Polyolefinwachse kann in gerührten Hochdruckautoklaven oder in Hochdruckrohrreaktoren erfolgen. Die Herstellung in gerührten Hochdruckautoklaven ist bevorzugt. Die für das Herstellungsverfahren angewandten gerührten Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Bei ihnen verhält sich überwiegend das Verhältnis Länge : Durchmesser in Intervallen von 5 : 1 bis 30 : 1, bevorzugt 10 : 1 bis 20 : 1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Polymerisation sind 500 bis 4.000 bar, bevorzugt 1.500 bis 2.500 bar. Die Reaktionstemperaturen liegen im Bereich von 170 bis 300 °C, bevorzugt im Bereich von 200 bis 280 °C.

Das Verfahren kann man in Gegenwart eines Reglers durchführen. Als Regler verwendet man beispielsweise Wasserstoff oder einen aliphatischen Aldehyd oder ein aliphatisches Keton.

Beispiele sind Formaldehyd, Acetaldehyd, Propionaldehyd, n-Butyraldehyd, iso-Butyr-aldehyd, n-Valeraldehyd, iso-Valeraldehyd, Aceton, Ethylmethylketon, Diethylketon, isoButylmethylketon, Cyclohexanon, Cyclopentanon oder Cyclododecanon.

Die Verwendung von Propionaldehyd oder Ethylmethylketon als Regler ist ganz besonders bevorzugt.

Weitere sehr gut geeignete Regler sind alkylaromatische Verbindungen, beispielsweise Toluol, Ethylbenzol oder ein oder mehrere Isomere des Xylol.

Weitere gut geeignete Regler sind unverzweigte aliphatische Kohlenwasserstoffe wie beispielsweise Propan. Besonders gute Regler sind verzweigte aliphatische Kohlenwasserstoffe mit tertiären H-Atomen, beispielsweise Isobutan, Isopentan, Iso-octan oder Isododekan (2,2,4,6,6-Pentamethylheptan). Ganz besonders geeignet ist Isododekan.

Die Menge an verwendetem Regler entspricht den für das Hochdruckpolymerisationsverfahren üblichen Mengen.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Als Radikalstarter verwendet man ein oder mehrere Peroxide, ausgewählt aus den kommerziell erhältlichen Substanzen Didekanoylperoxid, 2,5-Dimethyl-2,5-di(2-ethyl-hexanoylperoxy)hexan, tert.-Amylperoxy-2-ethylhexanoat, tert.-Amylperoxypivalat, Dibenzoylperoxid, tert.-Butylperoxy-2-ethylhexanoat, tert.Butylperoxydiethylacetat, tert.Butylperoxydiethylisobutyrat, 1,4-Di(tert.-butylperoxycarbo)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butyl-peroxyisopropylcarbonat, 2,2-Di-tert.-butylperoxybutan oder tert.-Butylperoxyacetat; tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylper-oxid, 2,5-Dimethyl-2,5-di(tert.-butylperoxy)-hex-3-in, Di-tert.-butylperoxid, 1,3-Diisopropylmono-hydroperoxid, Cumolhydroperoxid oder tert.-Bu- tylhydroperoxid; oder dimere oder trimere Ketonperoxide

Dimere oder trimere Ketonperoxide sowie Verfahren zu ihrer Herstellung sind aus EP-A 0 813 550 bekannt.

Als Peroxide sind Di-tert.-butylperoxid, tert.-Butylperoxypivalat, tert.-Amylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Die Radikalstarter werden in für Polymerisationen üblichen Mengen dosiert.

Das Herstellungsverfahren wird bevorzugt in Anwesenheit von Lösemitteln durchgeführt, wobei Mineralöle und andere Lösungsmittel, die in geringen Anteilen im Verfahren zugegen sind und beispielsweise zum Phlegmatisieren des oder der Radikalstarter verwendet wurden. Weitere Lösemittel sind beispielsweise aromatische Lösemittel. Besonders bevorzugte aromatische Kohlenwasserstoffe sind Toluol, Xylol-Isomere sowie Ethylbenzol.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xy-lol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls
CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Die Monomere werden üblicherweise gemeinsam oder getrennt dosiert. Das Mengenverhältnis bei der Dosierung entspricht üblicherweise nicht genau dem Verhältnis der Monomerbausteine in den Polyolefinwachsen, weil manche Monomere leichter und schneller in die Polyolefinwachse eingebaut werden als Olefine, speziell Ethylen.

Die Polyolefinwachse lassen sich vorzüglich dispergieren; insbesondere lassen sie sich im geschmolzenen Zustand besonders gut emulgieren. In der Regel werden die Polyolefinwachse als Dispersionen mit einem Feststoffgehalt von 10 bis 50 Gew% eingesetzt, bevorzugt 15 bis 40 Gew% und besonders bevorzugt 20 bis 30 Gew%.

Die Säuregruppen in den Polyolefinwachsen (B) sind bevorzugt zumindest teilweise neutralisiert. Zur Neutralisierung können die Säuregruppen teilweise oder vollständig mit Basen umgesetzt werden, beispielsweise Alkali- oder Erdalkalimetall oxiden, hydroxiden, hydrogencarbonaten oder carbonaten oder Aminen, bevorzugt Ammoniak, so daß deren acide Wasserstoffatome zumindest teilweise durch Alkalimetallionen, Erdalkalimetallionen oder protonierte Kationen von Aminen ersetzt sind, bevorzugt durch Natrium-, Kalium- oder Ammoniumionen, besonders bevorzugt durch Ammoniumionen (NH₄⁺).

Die Aufreinigung (2) der so erhaltenen Ethylencopolymere aus der Stufe (1) ist optional und kann gegebenenfalls erfolgen, indem man die Copolymere mit Lösungsmittel wäscht und anschließend abfiltriert oder abzentrifugiert.

Zur Entfernung unumgesetzter Monomere kann auch eine Vakuumdestillation oder Strippung sinnvoll sein. Beispielsweise wird dazu in einem ersten Schritt die Hauptmenge der Monomere destillativ abgetrennt und der Rest der Monomere anschließend durch Strippen mit einem unter den Reaktionsbedingungen inerten Gas, bevorzugt einem sauerstoffhaltigen Gas, besonders bevorzugt Luft oder Luft-Stickstoff-Gemische, oder aber auch mit Kohlendioxid oder Wasserdampf.

In der Regel ist eine Aufreinigung nicht erforderlich und wird bevorzugt nicht durchgeführt.

Derartige bevorzugte Ethylencopolymere (B) sind kommerziell unter dem Handelsnamen Poligen@ der BASF SE, Ludwigshafen, Deutschland, als Dispersionen oder unter dem Handelsnamen Luwax® der BASF SE, Ludwigshafen, Deutschland, sowie als Primacor® der DOW in Substanz verfügbar, unter diesen sind die Poligen® CE und Luwax® EAS Marken besonders bevorzugt und Poligen® CE12 und Primacor® 5980 I sind ganz besonders bevorzugt.

Die Klebeschicht (ii) kann optional neben der Polyurethandispersion (A) und dem säuregruppenhaltigen Ethylencopolymer (B) noch weitere Bestandteile enthalten, beispielsweise Mattierungshilfsmittel, Anti-Blocking Additive oder Klebeharze, bevorzugt besteht die Klebeschicht (ii) jedoch aus der wäßrigen Polyurethandispersion (A) und dem säuregruppenhaltigen Ethylencopolymer (B).

Aufgetragen wird die Klebschicht als wäßrige Dispersion in einer Menge, so daß nach Entfernung des Wassers in der Regel 1 bis 10 g/m² Klebschicht verbleiben, bevorzugt 1 bis 8, besonders bevorzugt 2 bis 5 g/m².

Sollte das Verpackungssystem noch eine optionale weitere Schicht (iii) enthalten, so kann es sich bei dieser Schicht (iii) um Styrol-(Meth)Acrylat Dispersionen handeln. Diese Schicht kann zum Schutz der aufgebrachten Klebschicht (ii) dienen, es ist jedoch auch möglich eine solche Schicht statt auf der Klebschicht (ii) auf der Außenseite des Substrats 1 oder 2 aufzutragen, wo die Schicht (iii) als Grundierung für eine noch aufzutragende Druckschicht fungiert.

Bei der optionalen weiteren Substratschicht (iv) kann es sich bevorzugt um orientiertes Polypropylen (OPP) handeln. Eine derartige Schicht kann beispielsweise dazu dienen, verschiedene miteinander verklebte Verpackungsbestandteile voneinander zu trennen und so zum Öffnen der Verpackung zu dienen. Es ist auch möglich als Substratschicht (iv) ein Substrat mit Barriereeigenschaften zu verwenden, falls dies gewünscht sein sollte.

Bei Schicht (v) handelt es sich um Substrat 2, ausgewählt aus der Gruppe bestehend aus Aluminiumfolie, beschichteter Aluminiumfolie und Polyethylen.

Für diese Substrate gilt das oben zu Substrat 1 Gesagte. Bevorzugt sind Substrat 1 und Substrat 2 gleich, besonders bevorzugt handelt es sich bei beiden um Aluminiumfolie.

Die Beschichtung der Substrate erfolgt nach üblichen, dem Fachmann bekannten Verfahren, wobei man wäßrige Klebeschicht (ii) auf das zu beschichtende Substrat in der gewünschten Stärke aufbringt und die gegebenenfalls enthaltenen flüchtigen Bestandteile der Klebschicht, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren oder Hinterspritzen erfolgen.
Die Verklebung der Substrate erfolgt in der Regel durch Erwärmen zumindest der Klebeschicht (ii) auf eine Temperatur zwischen 45 und 75 °C, leichtem Andrücken der Substratschichten und anschließendem Abkühlen.

Im folgenden wird die Erfindung anhand von Beispielen näher beschrieben.

In dieser Schrift verwendete ppm- und Prozentangaben beziehen sich, falls nicht anders angegeben, auf Gewichtsprozente und -ppm.

### Beispiele

### Vergleichsbeispiel 1

In einem Hochdruckautoklaven wurde ein säuregruppenhaltiges Copolymer aus Ethylen und Methacrylsäure hergestellt wie in M. Buback et al., Chem. Ing. Tech. 1994, 66, 510 beschrieben: Ethylen und Methacrylsäure wurden kontinuierlich copolymerisiert. Dazu wurde Ethylen (12,0 kg/h) unter dem Reaktionsdruck von 1700 bar in den Hochdruckautoklaven kontinuierlich eingespeist. Methacrylsäure (1,3 L/h) wurde zunächst auf einen Zwischendruck von 260 bar verdichtet und anschließend mit Hilfe eines weiteren Kompressors unter dem Reaktionsdruck von 1700 bar zusammen mit Ethylen kontinuierlich in den Hochdruckautoklaven eingespeist. Getrennt davon wurde die Initiatorlösung, bestehend aus tert.-Amylperoxypivalat unter dem Reaktionsdruck von 1700 bar kontinuierlich in den Hochdruckautoklaven eingespeist. Getrennt davon wurde gegebenenfalls das Propionaldehyd zunächst auf einen Zwischendruck von 260 bar verdichtet und anschließend mit Hilfe eines weiteren Kompressors unter dem Reaktionsdruck von 1700 bar in den Hochdruckautoklaven zusammen mit Ethylen und Methacrylsäure kontinuierlich eingespeist, so daß die Schmelzviskosität gemessen bei 120°C ca 800 mPas betrug (entspricht Mw = 4000 g/mol). Die Reaktionstemperatur betrug etwa 220°C. Man erhielt Ethylencopolymer mit 29 Gew.% Methacrylsäure.

Das so erhaltene Copolymer wurde in Wasser mit Ammoniak neutralisiert (1:1 mol/mol bezogen auf die Säuremenge) und bei 97°C gerührt bis sich eine homogene Emulsion bildete. Die Emulsion hat Polymergehalt von 20%.

### Beispiel 2

Es wurde ein säuregruppenhaltiges Copolymer aus Ethylen und Methacrylsäure wie in Vergleichsbeispiel 1 hergestellt, mit dem Unterschied, daß so viel Propionaldehyd zudosiert wurde, dass man eine Schmelzviskosität von 30 000 mPas gemessen bei 120°C erhielt. Das entpricht einem Mw ca. 50 000 g/mol.

Das so erhaltene Copolymer wurde in Wasser mit Ammoniak neutralisiert (1:1 mol/mol bezogen auf die Säuremenge) und bei 97°C gerührt bis sich eine homogene Emulsion bildete. Die Emulsion hat Polymergehalt von 20%.

### Anwendungsbeispiel 3

Die säuregruppenhaltigen Copolymere aus Vergleichsbeispiel 1 und Beispiel 2 bzw. die in der Tabelle angegebenen handelsüblichen säuregruppenhaltigen Copolymere wurden im Gewichtsverhältnis 80:20 mit einer handelsüblichen Polyurethandispersion NEOREZ® R600, aufgebaut aus (cyclo)aliphatischen Komponenten, der Firma DSM Neoresins, Waalwijk, Niederlande, gemischt.

Dieses Gemisch wurde auf eine Aluminiumfolie der Dicke 12 µm aufgetragen, für 2 Minuten bei 100 °C getrocknet, so daß sich eine Trockenschichtdicke von 2,5 g/m² ergab.
Die beschichteten Aluminiumstreifen wurden mit den Lackschichten zueinander für 30 Sekunden bei 70 °C mit einem Anpreßdruck von 0,8 N/cm² versiegelt. Die Siegelnahtfestigkeit der 15 mm breiten Streifen wurde in einem Zugmesser bei 150 mm/min bestimmt. Die höchste gemessene Stärke wird als Siegelnahtfestigkeit (seal strength) genommen (N/15 mm). Die Messung der Siegelnahtfestigkeit ist dabei mit einem Meßfehler von ca. 10% behaftet.

Die Messungen wurden nach Lagerung der beschichteten und versiegelten Aluminiumstreifen über x Tage wiederholt.

| | Siegelnahtfestigkeit [N/15mm] nach x Tagen | | | | | |
|---|---|---|---|---|---|---|
| Copolymer | 0 | 1 | 7 | 14 | 21 | 28 |
| Poligen WE3 | 4,2 | 4,0 | 4,1 | 3,9 | 4,1 | 4,0 |
| Poligen CE12 | 4,1 | 4,2 | 4,0 | 3,9 | 3,9 | 4,0 |
| Vergleichsbeispiel 1 | 3,0 | 2,8 | 2,6 | 2,5 | 2,6 | 2,5 |
| Beispiel 2 | 3,4 | 3,3 | 3,1 | 3,0 | 3,2 | 3,0 |

Bei Poligen WE3 und Poligen CE12 handelt es sich um handelsübliche Emulsionen von säuregruppenhaltigen Copolymeren mit einem Molgewicht Mw von jeweils ca. 90000.

Man sieht, daß mit dem Copolymer aus Beispiel 2 mit dem höheren Molekulargewicht eine erhöhte Siegelnahtfestigkeit erhalten wird, als mit dem Copolymer aus Vergleichsbeispiel 1 mit einem niedrigen Molekulargewicht.

### Anwendungsbeispiel 4

Das säuregruppenhaltige Copolymer Poligen CE12 wurde im Gewichtsverhältnis 80:20
a) mit der handelsüblichen Polyurethandispersion NEOREZ® R600 der Firma DSM Neoresins, Waalwijk, Niederlande,
b) mit der handelsüblichen Polyurethandispersion LUPHEN® D200A der Firma BASF SE, Ludwigshafen, Deutschland,
c) mit der handelsüblichen Polyurethandispersion ASTACIN® Finish PT der Firma BASF SE, Ludwigshafen, Deutschland,
   gemischt.

Bei LUPHEN® D200A handelt es sich um eine Polyurethandispersion, die aromatische Isocyanate und aliphatische Polyester als Aufbaukomponenten enthält.

Bei ASTACIN® Finish PT handelt es sich um eine Polyurethandispersion auf Basis eines aliphatischen Polyurethans.

Die Messung der Siegelnahtfestigkeit erfolgte wie in Anwendungsbeispiel 3 beschrieben.

| | Siegelnahtfestigkeit [N/15mm] nach x Tagen | | | | | |
|---|---|---|---|---|---|---|
| | 0 | 1 | 7 | 14 | 21 | 28 |
| a) Neorez® R600 | 4,1 | 4,2 | 4,0 | 3,9 | 3,9 | 4,0 |
| b) Luphen® D200A | 3,7 | 3,7 | 3,9 | 3,7 | 3,8 | 3,9 |
| c) Astacin® Finish PT | 4,0 | 3,9 | 3,7 | 4,0 | 3,9 | 3,8 |

Beide Beschichtungen zeigen eine hohe Siegelnahtfestigkeit. Man sieht, daß die Beschichtungsmasse, die die Polyurethandispersion mit aromatischen Bausteinen enthält, ihre Siegelnahtfestigkeit im Verlauf der Lagerung nicht nur beibehält, sondern sogar noch erhöht, wohingegen die Beschichtungsmasse, enthaltend aliphatische Polyurethandispersionen eine hohe Siegelnahtfestigkeit ergeben, diese aber über die Lagerung leicht abnimmt.

### Anwendungsbeispiel 5 (Vergleich)

Anwendungsbeispiel 3 wurde mit Poligen CE12 als säuregruppenhaltigem Copolymer wiederholt, und es wurden die in der Tabelle angegebenen Mengen Polyurethandispersion Neorez® R600 beigemischt, d.h. es wurde in a) reines säuregruppenhaltiges Copolymer aufgetragen. Anschließend wurde die Beschichtung wie in Anwendungsbeispiel 3 versiegelt und geprüft.

Die Messungen wurden nach Lagerung über verschiedene Tage wiederholt.

| | Siegelnahtfestigkeit [N/15mm] nach x Tagen | | | | | |
|---|---|---|---|---|---|---|
| Polyurethandispersion | 0 | 1 | 7 | 14 | 21 | 28 |
| a) 0 % | 4,1 | 3,1 | 1,2 | 1,1 | 1,1 | 1,1 |
| b) 10 % | 3,8 | 3,7 | 3,1 | 3,2 | 3,1 | 2,9 |
| c) 20 % | 4,1 | 4,2 | 4,0 | 3,9 | 3,9 | 4,0 |

Man sieht, daß die Siegelnahtfestigkeit ohne Beimischung einer Polyurethandispersion nach anfänglich guten Werten nach wenigen Tagen Lagerung auf nur noch etwa ein Viertel des Anfangswertes einbricht. Durch Beimischung einer Polyurethandispersion in den Mengen wie in b) und c) angegeben bleibt die Siegelnahtfestigkeit auch über die Lagerung hinweg auf einem hohen Niveau.

## Patentansprüche

1. Verklebte Verpackungssysteme, aufgebaut zumindest aus den Schichten
(i) Substrat 1, ausgewählt aus der Gruppe bestehend aus Aluminiumfolie, beschichteter Aluminiumfolie und Polyethylen,
(ii) mindestens einer Klebeschicht, enthaltend
(A) 5 bis 95 Gew% mindestens einer wäßrigen Polyurethandispersion und
(B) 5 bis 95 Gew% mindestens eines säuregruppenhaltigen Ethylencopolymers
(v) Substrat 2, ausgewählt aus der Gruppe bestehend aus Aluminiumfolie, beschichteter Aluminiumfolie und Polyethylen,
wobei das säuregruppenhaltige Ethylencopolymer zumindest aus den Monomeren Ethylen und (Meth)acrylsäure aufgebaut ist und ein Molgewicht von mindestens 45.000 g/mol (gemessen per GPC als vollständig methylverestertes Derivat) aufweist und
wobei die Klebeschicht (ii) so zusammengesetzt ist, daß sie einen Schmelzpunkt von mindestens 40 °C und weniger als 90 °C aufweist.

2. Verpackungssystem gemäß Anspruch 1, **dadurch gekennzeichnet, daß** es sich bei den Substraten 1 und 2 um Aluminium handelt.

3. Verpackungssystem gemäß einem der vorstehenden Ansprüche, **dadurch gekennzeichnet, daß** die Polyurethandispersion (A) hergestellt wird durch
(I) Herstellung eines Polyurethans durch Umsetzung von
a) mehrwertigen Isocyanaten mit 4 bis 30 C-Atomen,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
d) von den Monomeren (a), (b) und (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppe oder eine potentiell hydrophile Gruppe tragen, wodurch die Wasserdispergierbarkeit der Polyurethane bewirkt wird,
zu einem Polyurethan
(II) anschließende Dispergierung des Polyurethans in Wasser.

4. Verpackungssystem gemäß Anspruch 3, **dadurch gekennzeichnet, daß** es sich bei dem Isocyanat a) um ein aromatisches handelt.

5. Verpackungssystem gemäß Anspruch 3, **dadurch gekennzeichnet, daß** es sich bei dem Isocyanat a) um ein aliphatisches handelt.

6. Verpackungssystem gemäß Anspruch 3, **dadurch gekennzeichnet, daß** es sich bei dem Diol b1) um ein Polyesterdiol handelt.

7. Verpackungssystem gemäß Anspruch 3, **dadurch gekennzeichnet, daß** das Diol b1) ausgewählt ist aus der Gruppe bestehend aus Polyethylenglykol, Polypropylenglykol oder Polytetrahydrofuran mit einem Molekulargewicht von 500 bis 5000.

8. Verpackungssysteme gemäß einem der vorstehenden Ansprüche, **dadurch gekennzeichnet, daß** das säuregruppenhaltigen Polyolefinwachse (B) zusammengesetzt ist wie folgt:
f) 40 bis 90 Gew% mindestens eines Olefins ohne weitere funktionelle Gruppen,
g) zwischen 10 und 40 Gew% Methacrylsäure und/oder Acrylsäure
h) 0 bis 25 Gew% mindestens eines von f) und g) verschiedenen, mindestens eine funktionelle Gruppe tragendes Monomeren,
mit der Maßgabe, daß die Summe immer 100 Gew% ergibt.

9. Verpackungssysteme gemäß Anspruch 8, **dadurch gekennzeichnet, daß** Säuregruppen im Polyolefinwachs (B) zumindest teilweise mit Ammoniak neutralisiert sind.

10. Verwendung von Verpackungssystemen gemäß einem der vorstehenden Ansprüche zum Verpacken von Lebensmitteln.

11. Verwendung gemäß Anspruch 10, **dadurch gekennzeichnet, daß** das Lebensmittel ausgewählt ist aus der Gruppe bestehend aus Käse, Wurst und Margarine.

## Claims

1. An adhesively bonded packaging system composed at least of the following layers:
(i) substrate 1, selected from the group consisting of aluminum foil, coated aluminum foil, and polyethylene,
(ii) at least one adhesive layer comprising
(A) 5 to 95 wt% of at least one aqueous polyurethane dispersion and
(B) 5 to 95 wt% of at least one acid-functional ethylene copolymer,
(v) substrate 2, selected from the group consisting of aluminum foil, coated aluminum foil, and polyethylene,
the acid-functional ethylene copolymer being composed at least of the monomers ethylene and (meth)acrylic acid and having a molar weight of at least 45 000 g/mol (measured by GPC as fully methyl-esterified derivative), and
the composition of the adhesive layer (ii) being such that it has a melting point of at least 40°C and less than 90°C.

2. The packaging system according to claim 1, wherein substrates 1 and 2 are aluminum.

3. The packaging system according to either of the preceding claims, wherein the polyurethane dispersion (A) is prepared by
(I) preparing a polyurethane by reacting
a) polyfunctional isocyanates having 4 to 30 C atoms,
b) diols of which
b1) 10 to 100 mol%, based on the total amount of the diols (b), have a molecular weight of 500 to 5000, and
b2) 0 to 90 mol%, based on the total amount of the diols (b), have a molecular weight of 60 to 500 g/mol,
c) optionally further polyfunctional compounds, different from the diols (b), having reactive groups which are alcoholic hydroxyl groups or primary or secondary amino groups, and
d) monomers different from the monomers (a), (b), and (c) and having at least one isocyanate group or at least one group which is reactive toward isocyanate groups, and further carrying at least one hydrophilic group or potentially hydrophilic group, thereby rendering the polyurethane dispersible in water,
to give a polyurethane, and
(II) subsequently dispersing the polyurethane in water.

4. The packaging system according to claim 3, wherein isocyanate a) is aromatic.

5. The packaging system according to claim 3, wherein isocyanate a) is aliphatic.

6. The packaging system according to claim 3, wherein the diol b1) is a polyesterdiol.

7. The packaging system according to claim 3, wherein the diol b1) is selected from the group consisting of polyethylene glycol, polypropylene glycol, or polytetrahydrofuran having a molecular weight of 500 to 5000.

8. The packaging system according to any of the preceding claims, wherein the acid-functional polyolefin wax (B) has the following composition:
f) 40 to 90 wt% of at least one olefin without further functional groups,
g) between 10 and 40 wt% of methacrylic acid and/or acrylic acid,
h) 0 to 25 wt% of at least one monomer which is different from f) and g) and which carries at least one functional group,
with the proviso that the sum total always makes 100% by weight.

9. The packaging system according to claim 8, wherein at least some of the acid groups in the polyolefin wax (B) are neutralized with ammonia.

10. The use of the packaging system according to any of the preceding claims to package a food.

11. The use according to claim 10, wherein the food is selected from the group consisting of cheese, sausage, and margarine.

## Revendications

1. Systèmes d'emballage collés, formés au moins par les couches suivantes :
(i) un substrat 1, choisi dans le groupe constitué par un film d'aluminium, un film d'aluminium revêtu et le polyéthylène,
(ii) au moins une couche adhésive, contenant :
(A) 5 à 95 % en poids d'au moins une dispersion aqueuse de polyuréthane et
(B) 5 à 95 % en poids d'au moins un copolymère d'éthylène contenant des groupes acides,
(v) un substrat 2, choisi dans le groupe constitué par un film d'aluminium, un film d'aluminium revêtu et le polyéthylène,
le copolymère d'éthylène contenant des groupes acide étant formé au moins par les monomères éthylène et acide (méth)acrylique et présentant un poids moléculaire d'au moins 45 000 g/mol (mesuré par CPG sous la forme d'un dérivé entièrement estérifié par des groupes méthyle), et la couche adhésive (ii) étant composée de sorte qu'elle présente un point de fusion d'au moins 40 °C et inférieur à 90 °C.

2. Système d'emballage selon la revendication 1, **caractérisé en ce que** les substrats 1 et 2 sont de l'aluminium.

3. Système d'emballage selon l'une quelconque des revendications précédentes, **caractérisé en ce que** la dispersion de polyuréthane (A) est fabriquée par
(I) fabrication d'un polyuréthane par mise en réaction de
a) des isocyanates polyvalents de 4 à 30 atomes C,
b) des diols, parmi lesquels
b1) 10 à 100 % en moles, par rapport à la quantité totale des diols (b), présentent un poids moléculaire de 500 à 5 000, et
b2) 0 à 90 % en moles, par rapport à la quantité totale des diols (b), présentent un poids moléculaire de 60 à 500 g/mol,
c) éventuellement d'autres composés polyvalents différents des diols (b), contenant des groupes réactifs qui sont des groupes hydroxyle alcooliques ou des groupes amino primaires ou secondaires, et
d) des monomères différents des monomères (a), (b) et (c), contenant au moins un groupe isocyanate ou au moins un groupe réactif avec les groupes isocyanate, qui portent en outre au moins un groupe hydrophile ou un groupe potentiellement hydrophile, qui provoque la dispersibilité dans l'eau des polyuréthanes,
pour former un polyuréthane, puis
(II) dispersion du polyuréthane dans de l'eau.

4. Système d'emballage selon la revendication 3, **caractérisé en ce que** l'isocyanate a) est aromatique.

5. Système d'emballage selon la revendication 3, **caractérisé en ce que** l'isocyanate a) est aliphatique.

6. Système d'emballage selon la revendication 3, **caractérisé en ce que** le diol b1) est un polyesterdiol.

7. Système d'emballage selon la revendication 3, **caractérisé en ce que** le diol b1) est choisi dans le groupe constitué par le polyéthylène glycol, le polypropylène glycol ou le polytétrahydrofurane ayant un poids moléculaire de 500 à 5 000.

8. Systèmes d'emballage selon l'une quelconque des revendications précédentes, **caractérisés en ce que** la cire de polyoléfine contenant des groupes acides (B) a la composition suivante :
f) 40 à 90 % en poids d'au moins une oléfine sans autres groupes fonctionnels,
g) entre 10 et 40 % en poids d'acide méthacrylique et/ou d'acide acrylique,
h) 0 à 25 % en poids d'au moins un monomère différent de f) et g), portant au moins un groupe fonctionnel,
à condition que la somme soit toujours de 100 % en poids.

9. Systèmes d'emballage selon la revendication 8, **caractérisés en ce que** les groupes acides dans la cire de polyoléfine (B) sont au moins partiellement neutralisés avec de l'ammoniac.

10. Utilisation de systèmes d'emballage selon l'une quelconque des revendications précédentes pour l'emballage de produits alimentaires.

11. Utilisation selon la revendication 10, **caractérisée en ce que** le produit alimentaire est choisi dans le groupe constitué par le fromage, la charcuterie et la margarine.
